# FASCICULE DE BREVET EUROPEEN

(11) **EP 2 344 384 B1**
(45) Date de publication et mention de la délivrance du brevet: **09.10.2013**
(21) Numéro de dépôt: 09740342.2
(22) Date de dépôt: 07.09.2009
(51) Int. Cl.: B64D 33/02, B64D 29/08

(54) **NACELLE POUR TURBOREACTEUR**
STRAHLTRIEBWERKSGONDEL
TURBOJET ENGINE NACELLE

(30) Priorité: 13.11.2008 FR 0806317
(43) Date de publication de la demande: 20.07.2011
(73) Titulaire: Aircelle, 76700 Gonfreville l'Orcher (FR)
(72) Inventeur: JORET, Jean-Philippe, F-27210 Beuzeville (FR); VAUCHEL, Guy, F-76600 Le Havre (FR)
(74) Mandataire: Gaillarde, Frédéric F. Ch.
(86) Numéro de dépôt international: PCT/FR2009/001067
(87) Numéro de publication internationale: WO 2010/055217

(56) Documents cités:
- FR-A- 2 757 823
- FR-A- 2 898 870
- FR-A- 2 914 363
- GB-A- 2 274 490

## Description

L'invention concerne une nacelle pour turboréacteur.

Un aéronef est propulsé par un ou plusieurs ensembles propulsifs comprenant un turboréacteur logeant dans une nacelle tubulaire. Chaque ensemble propulsif est rattaché à l'aéronef par un mât d'accrochage situé généralement sous une aile ou au niveau du fuselage.

Une nacelle présente généralement une structure comprenant une entrée d'air en amont du moteur, une section médiane destinée à entourer une soufflante du turboréacteur, une section aval abritant des moyens d'inversion de poussée et destinée à entourer la chambre de combustion du turboréacteur.

On entend ici par le terme « aval » la direction correspondant au sens du flux d'air, notamment d'air froid, pénétrant dans le turboréacteur. Le terme « amont » désigne la direction opposée.

L'entrée d'air comprend, d'une part, une lèvre d'entrée adaptée pour permettre la captation optimale vers le turboréacteur de l'air nécessaire à l'alimentation de la soufflante et des compresseurs internes du turboréacteur, et d'autre part, une structure aval sur laquelle est rapportée la lèvre et destinée à canaliser convenablement l'air vers les aubes de la soufflante. L'ensemble est rattaché en amont d'un carter de soufflante entourant la soufflante et appartenant au turboréacteur.

La nacelle abrite des équipements internes nécessaires au fonctionnement du turboréacteur. Ces équipements internes sont logés sur une grande partie de la longueur de la nacelle. Ainsi, en amont de la nacelle, il existe des systèmes de dégivrage pour éviter que du givre ou de la glace ne se forme sur la lèvre d'entrée d'air et ainsi diminuer fortement la performance du moteur. Plus en aval, certains équipements internes permettent l'alimentation et le bon fonctionnement du moteur.

Actuellement, les opérations de maintenance sur ces équipements internes obligent les constructeurs à prévoir des trappes d'accès. Malgré les efforts mis en oeuvre pour optimiser le positionnement des trappes et permettre un accès le plus facile possible, il est parfois nécessaire de visiter lesdits équipements à l'aide d'outils spécifiques tel qu'un endoscope, ce qui ne donne pas entière satisfaction au niveau du contrôle de ces équipements.

Par ailleurs, en cas de besoin de remplacer une partie des équipements internes, il est généralement nécessaire de déposer la totalité de la structure d'entrée d'air, ce qui requiert un outillage important et entraîne une immobilisation de l'ensemble propulsif et donc généralement de l'aéronef.

On notera également que les conditions d'exploitation et de maintenance d'une entrée d'air obligent à avoir des composants distincts, comme une lèvre modulaire sectorisée ainsi qu'un panneau externe facilement démontable en raison de leur fort taux de remplacement du à leur exposition directe au milieu extérieur et à d'éventuels projectiles. Ces contraintes réduisent de manière importante l'intégrité de la ligne aérodynamique générale de la structure d'entrée d'air, ce que la présence de trappes d'accès vient encore aggraver.

Des solutions ont été présentées dans le document US 5 609 313, qui décrit toutes les caracteristiques du préambule de la revendication 1 et est considéré l'état de la technique plus proche, et la demande FR06/08599. Afin de pallier les inconvénients évoqués, ces documents prévoient une nacelle de turboréacteur comprenant une structure d'entrée d'air translatable vers l'avant et découvrant ainsi la zone située dans la structure d'entrée d'air.

Ainsi, il est possible de faciliter de démonter et de remplacer au moins partiellement la structure d'entrée d'air en intégrant la lèvre d'entrée d'air au panneau externe de manière à former une pièce unique démontable. De ce fait, il est possible d'accéder à des équipements internes sans demander de manoeuvres importantes et compliquées ni requérir un temps d'immobilisation élevé.

Ces capots mobiles sont généralement montés sur un système de guidage formé de rails et de glissières répartis autour de la nacelle. Les rails permettent un dégagement de l'ensemble formé par le panneau externe et la lèvre d'entrée d'air pour libérer la zone située dans la structure d'entrée d'air. Néanmoins, les équipements internes logés en aval de la structure d'entrée d'air restent difficilement accessibles.

Dans la demande GB 2 274 490, on propose une nacelle dans laquelle le panneau externe et la lèvre d'entrée d'air forment une structure mobile coulissant vers l'amont de la nacelle par le moyen d'un système de rails. De plus, le panneau externe couvre le panneau interne et le carter de soufflante auquel est rattaché le panneau interne.

Néanmoins, ce type de nacelle peut être difficilement manoeuvrable. Il existe un risque important de coincement, notamment entre le mât d'accrochage et le panneau externe. De plus, ce type de nacelle n'est pas adapté pour des nacelles disposées au niveau du fuselage d'un aéronef et pour lesquelles le mât d'accrochage est sensiblement horizontal par rapport au corps de l'aéronef. En effet, dans ce cas, l'épaisseur de la nacelle est fine si bien que le panneau externe peut buter contre des équipements internes présents à l'intérieur de la nacelle.

Un but de la présente invention est donc de fournir une nacelle pour turboréacteur adaptée pour être accrochée sur un mât d'accrochage sensiblement horizontal et présentant une bonne manoeuvrabilité pour accéder facilement à l'intérieur de la nacelle en aval du panneau interne.

A cet effet, l'invention a pour objet une nacelle pour turboréacteur comprenant :
- une structure d'entrée d'air apte à canaliser un flux d'air vers une soufflante du turboréacteur, comprenant une lèvre d'entrée d'air en amont de la nacelle rattachée à ses extrémités à un panneau externe et un panneau interne,
- une structure médiane destinée à entourer ladite soufflante et à laquelle est rattachée la structure d'entrée d'air de manière à assurer une continuité aérodynamique, ladite structure médiane comprenant une virole externe du canal du flux secondaire destinée à entourer le moteur et un capot externe médian, et
- une section aval,
caractérisée en ce que le panneau externe comprend une partie mobile rattachée à la lèvre d'entrée d'air et s'étendant en aval du panneau interne, et au moins une partie fixe fixée à la structure médiane ou à la section aval et destinée à s'emboîter avec la partie mobile par complémentarité de forme.

Le panneau externe de la nacelle de l'invention comprend une partie mobile rattachée à la lèvre d'entrée d'air et s'étendant en aval du panneau interne et donc sur au moins la zone où est située la soufflante. Le panneau externe de l'invention comprend également au moins une partie fixe fixée à la structure médiane et destinée à s'emboîter avec la partie mobile. Ainsi, lorsque la partie mobile passe d'une position de maintenance où ladite partie mobile rattachée à la lèvre d'entrée d'air est écartée de la ou des parties fixes et du capot externe médian à une position de fonctionnement où la partie mobile et la partie fixe sont emboîtées pour assurer la continuité aérodynamique de l'extérieur de la nacelle, la ou les parties fixes permettent de guider la partie mobile de sorte à faciliter la manoeuvrabilité tout en évitant tout coincement avec des éléments de la nacelle de l'invention, notammant le mât d'accrochage. L'utilisateur peut donc de manière aisée accéder aux équipements logés dans la région s'étendant en aval de la structure d'entrée d'air.

Par ailleurs, de manière avantageuse, il est possible de regrouper des équipements internes situés à l'intérieur de la nacelle sous au moins une partie fixe. De ce fait, dans le cas où la partie mobile passe de la position de fonctionnement à la position de maintenance, on évite tout risque de blocage et de percussion entre ladite partie mobile et ces équipements internes. Ainsi, la nacelle de l'invention est adaptée pour être installée sur un mât d'accrochage sensiblement horizontal par rapport au corps de l'aéronef.

Selon d'autres caractéristiques de l'invention, l'ensemble selon l'invention comporte l'une ou plusieurs des caractéristiques optionnelles suivantes considérées seules ou selon toutes les combinaisons possibles:
- la partie mobile s'étend sur au moins une partie de la virole externe du canal du flux secondaire ce qui permet d'obtenir un dégagement plus important de la structure mobile formée par la lèvre d'entrée d'air et de la partie mobile ;
- le capot externe médian est maintenu par des éléments de renfort configurés pour fixer ledit capot externe médian à la virole externe du canal du flux secondaire ce qui permet de renforcer la tenue structurale de la structure médiane ;
- les éléments de renfort sont des éléments sensiblement en forme de S ou de C ce qui permet d'attacher facilement ces éléments à la structure médiane et à la virole externe du canal du flux secondaire ;
- une partie fixe est une rampe montée autour d'un mât d'accrochage de la nacelle ce qui permet d'éviter tout coincement entre la partie mobile et le mât d'accrochage pendant l'ouverture ;
- la rampe présente une forme sensiblement triangulaire s'étendant selon l'axe longitudinal du mât d'accrochage dont l'angle au sommet est au moins égal à 5° ce qui assure une mobilité du panneau externe sans coincement de ce dernier au niveau du mât d'accrochage.
- une partie fixe s'étend vers l'amont de la nacelle de l'invention selon l'axe longitudinal de cette dernière ;
- la nacelle de l'invention est une nacelle pour fuselage d'aéronef, notamment destinée à être fixée à un mât d'accrochage sensiblement horizontal.

L'invention sera davantage comprise à la lecture de la description non limitative qui va suivre, faite en référence aux figures ci-annexées.
- La figure 1 est une vue en perspective d'un mode de réalisation de la nacelle 1 de l'invention,
- Les figures 2 et 3 sont des coupes transversales partielles du mode de réalisation de la figure 1 en position d'ouverture et de fermeture, respectivement,
- Les figures 4 et 5 des coupes transversales partielles d'une variante du mode de réalisation de la figure 1 en position d'ouverture et de fermeture, respectivement,
- Les figures 6 et 7 sont respectivement une vue en perspective et une section transversale d'un autre mode de réalisation de la figure 1.

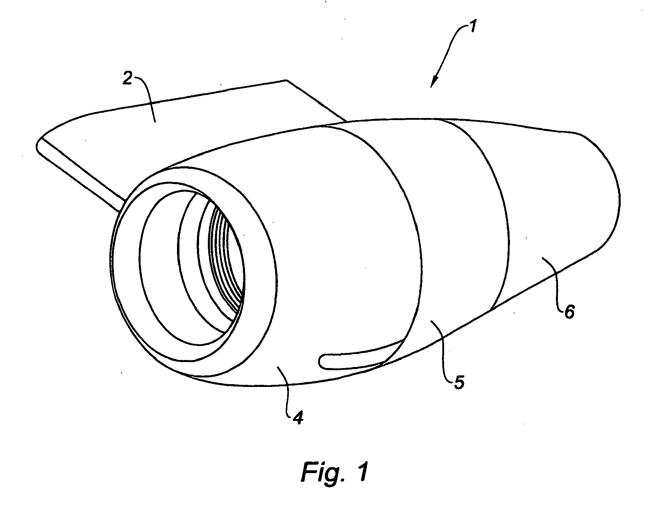

Selon le mode de réalisation représenté à la figure 1, la nacelle 1 de l'invention est destinée à être rattachée par l'intermédiaire d'un mât d'accrochage 2 à une structure fixe d'un aéronef, telle qu'une aile. Dans ce mode de réalisation, la nacelle 1 de l'invention est disposée au niveau du fuselage de l'aéronef par l'intermédiaire d'un mât d'accrochage sensiblement horizontal par rapport au corps de l'aéronef. La nacelle 1 de l'invention peut également s'appliquer pour tout type de nacelle connue de l'homme du métier.

Plus précisément, la nacelle 1 de l'invention représentée à la figure 1 possède une structure comprenant une structure d'entrée d'air 4 en amont, une structure médiane 5 entourant une soufflante 7 du turboréacteur 8 ainsi qu'une partie de ce dernier, et une section aval 6 entourant la partie avale du turboréacteur 8 et abritant généralement un système d'inversion de poussée (non représenté).

La soufflante 7 du tuboréacteur est entourée par un carter de moteur 9 destinée à être fixé par son extrémité amont à la struture d'entrée d'air 4 et par son extremité aval à la structure médiane 5 de manière à assurer une continuité aérodynamique.

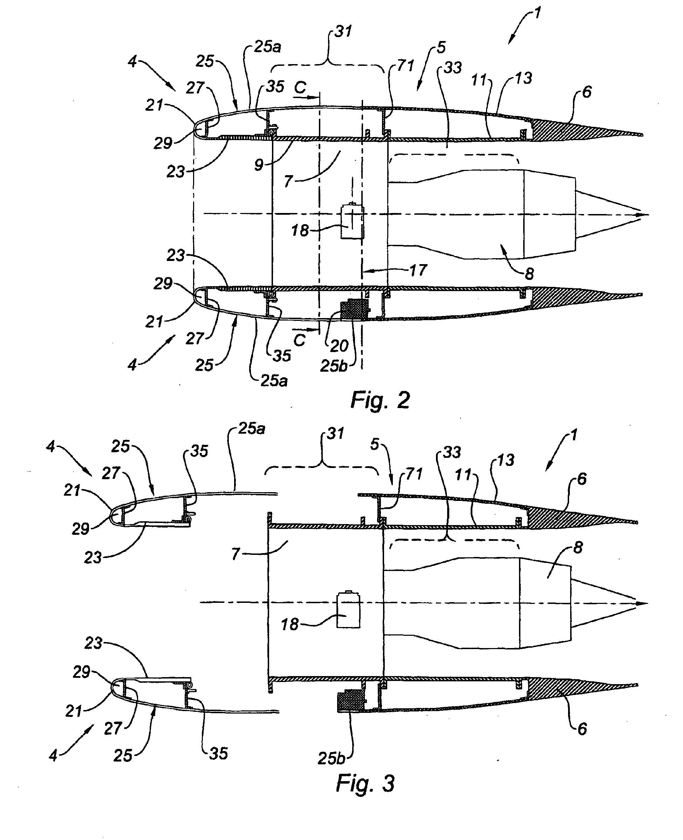

Comme représenté sur la figure 2, la structure médiane 5 comporte également une virole externe du canal du flux secondaire 11 rattachée à une extrémité au carter de souflante 9 de sorte à entourer une partie du turboréacteur 8, et à une autre extrémité à la section aval 6. Le rattachement de ladite virole externe du canal du flux secondaire 11 est effectué par tout moyen connu de l'homme du métier.

Suivant le mode de réalisation représenté à la figure 1, le flux d'air traverse les pâles de la soufflante pour déboucher dans un conduit délimité par le turboréacteur 8, la virole externe du canal du flux secondaire 11 et la section aval 6.

La structure médiane 5 peut comporter également un capot externe médian 13 destiné à entourer le carter de souflante 9 et/ou la virole externe du canal du flux secondaire 11.

La structure d'entrée d'air 4 comporte une lèvre d'entrée d'air 21 reliée à une première extrémité à un panneau interne 23.

La lèvre d'entrée d'air 21 est adaptée pour permettre la captation optimale vers le turboréacteur 8 de l'air nécessaire à l'alimentation de la soufflante 7 et des compresseurs internes du turboréacteur 8. Typiquement, la lèvre d'entrée d'air 21 est réalisée en aluminium, en titane, voire en tout matériau composite, notamment haute température, connu de l'homme du métier et adapté pour une application de dégivrage pneumatique.

Le panneau interne 23 est destiné à canaliser convenablement l'air vers les aubes (non représentées) de la soufflante 7. Le panneau interne 23 est ainsi fixé à son extrémité aval à une extrémité amont du carter de soufflante 9 par l'intermédiaire de moyens de fixation. Ainsi, le panneau interne 23 forme avec la structure médiane 5 et le carter de soufflante 9 une structure fixe par rapport à la nacelle 1. Typiquement, le panneau interne 23 est réalisé dans un matériau composite en carbone, voire en aluminium. Le panneau interne 23 peut être constitué d'une seule pièce ou de plusieurs pièces assemblées.

Par ailleurs, le panneau interne 23 peut comprendre une virole acoustique destinée à atténuer les nuisances sonores dues au fonctionnement du turboréacteur 8 et aux vibrations de la nacelle 1 de l'invention. La virole acoustique est typiquement constituée d'une structure en nid d'abeille ou de toute autre structure connue de l'homme du métier permettant d'absorber les vibrations acoustiques.

Une cloison 27 sépare la lèvre d'entrée d'air 21 du reste de ladite structure d'entrée d'air 4. La cloison 27 permet ainsi de délimiter une cavité 29 au sein de laquelle des équipements, tels que des équipements de dégivrage, sont disposés pour assurer le fonctionnement de la nacelle 1 de l'invention. Typiquement, la cloison 27 est réalisée en aluminium, en titane, voire en tout matériau composite, connu de l'homme du métier. La nacelle 1 de l'invention comporte également un paneau externe 25 comprenant une partie mobile 25a et au moins une partie fixe 25b. La partie mobile 25a est rattachée à une deuxième extrémité de la lèvre d'entrée d'air 21 par tout moyen connu de l'homme du métier.

La partie mobile 25a couvre sensiblement le panneau interne 23 et s'étend en aval dans la zone où est située la soufflante 7 et le carter de soufflante 9, de manière à former une pièce unique démontable, dénommée structure mobile. A cet effet, la lèvre d'entrée d'air 21 peut être intégrée à la dite partie mobile 25a.

La ou les parties fixes 25b sont fixées à la structure médiane 5, notamment au capot externe 13, ou à la section aval 6 par tout moyen connu de l'homme du métier. La ou les parties fixes 25b sont destinées à s'emboîter avec la partie mobile 25a par complémentarité de forme. A cet effet, La ou les parties fixes 25b présentent une forme complémentaire appropriée à l'ouverture correspondante présente sur la partie mobile 25a. Ainsi, la continuité aérodynamique du panneau externe est assurée lorsque la partie mobile est en position de fermeture.

En outre, de manière avantageuse, La ou les parties fixes 25b servent de moyens de guidage lorsque la partie mobile 25a passe de la position de maintenance à la position de fermeture. A cet effet, des moyens d'étanchéité tels que des joints peuvent être disposés entre La ou les parties fixes 25b et la partie mobile 25a.

Typiquement, la partie mobile 25a et La ou les parties fixes 25b du panneau externe 25 sont réalisées dans un matériau composite en carbone, voire en aluminium. La partie mobile 25a et La ou les parties fixes 25b peuvent être constituées d'une seule pièce ou de plusieurs pièces assemblées.

La mobilité de la lèvre d'entrée d'air 21 et de la partie mobile 25a permet ainsi un dégagement en aval de la structure d'entrée pour accéder plus facilement aux équipements internes de la nacelle 1 de l'invention situés dans la zone 31 située en aval de la structure d'entrée d'air 4. La manoeuvrabilité de la structure mobile est facilitée par la présence de la au moins une partie fixe qui permet de guider la fermeture de cette structure mobile.

Comme indiqué sur la figure 2, le trait 17 délimite le dégagement en aval de la structure d'entrée d'air 4. Ce dégagement est conditionné notamment par le profil aérodynamique de la nacelle 1 de l'invention. En effet, dans le cadre de nacelles disposées au niveau de fuselage par des mâts d'accrochage sensiblement horizontaux, la longueur du panneau externe 25 est limitée par l'encombrement des équipements internes 20. Si un équipement interne 20 est trop volumineux, alors la partie aval extrémale de la partie mobile 25a peut venir buter contre cet équipement 20 ce qui bloque et risque d'endommager le panneau externe 25 et l'équipement interne 20. La délimitation représentée par le trait 17 est également conditionné par le besoin d'accéder à certains équipements, tels que le réservoir d'huile, notamment le bouchon 18.

A titre d'exemple d'équipements internes 20, on peut citer encore des équipements électriques et électroniques.

Afin de soutenir la surface plus importante du panneau externe 25, notamment la surface de la partie mobile 25a et de la partuie fixe 25b, des renforts 35 sont fixés sur le panneau externe 25 et sur la panneau interne 23. Ce type de renfort 35 est de tout type de renfort connu par l'homme du métier. Ainsi, les renforts 35 peuvent être réalisés dans un matériau organique ou métallique et/ou sensiblement en forme de C ou de S. Les renforts 35 peuvent être, en outre, continus ou locaux.

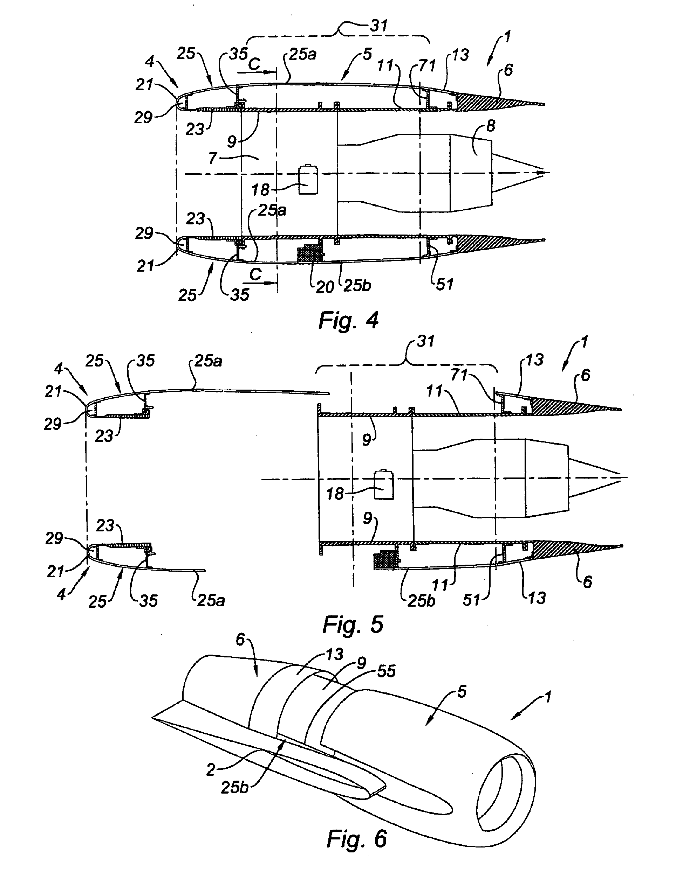

Des équipements internes 20 peuvent être regroupés notamment à 3h, 6h ou 12h du mât d'accrochage 2, sous au moins une partie fixe 25b et ainsi il est possible d'allonger la longueur de la partie mobile 25a (voir figure 4 et 5). Les orientations 3h, 6h et 12h correspondent à des positions dans une section transversale de la nacelle 1 de l'invention relativement au mât d'accrochage 2.

A titre d'exemple d'équipements susceptibles d'être regroupés, on peut citer la boîte d'accessoire, encore appelée accessory gear box et le réservoir d'huile.

Certains équipements fragiles, comme les équipements électroniques, peuvent être endommagés lorsqu'ils subissent des températures élevées, notamment supérieures à 110°C. Dans cette perspective, ce type d'équipements peut être, de manière avantageuse, positionné à 3h du mât d'accrochage et ainsi éviter les rayonnements du soleil. A titre d'exemple de tels équipements, on peut citer le boîtier de commande électrique et électronique de la nacelle 1 de l'invention.

Selon le mode de réalisation représenté aux figures 4 et 5, la partie mobile 25a s'étend sur au moins une partie de la virole externe du canal du flux secondaire 11 ce qui permet d'obtenir un dégagement encore plus en aval et ainsi un accès à des équipements internes logés dans la région 33 à proximité de la section aval 6. Dans ce cas-là, la longueur du capot externe médian 13 est raccourci.

Dans une variante non représentée, la partie mobile 25a peut s'étendre sur la totalité de la zone comportant la soufflante 7 et le carter de soufflante 9 et sur la virole externe du canal du flux secondaire 11. Ainsi, dans ce mode de réalisation, le capot externe médian 13 est supprimé et la ou les parties fixes 25b sont fixées à la section aval 6. De ce fait, la partie mobile 25a et la au moins une partie fixe 25b assurent la fonction le capot externe médian 13.

La ou les parties fixes 25b peuvent être composées d'un élément ou encore d'une pluralité d'éléments disposés sur la circonférence et rattachés au capot externe médian 13 ou de la section aval 6. Le nombre de tels éléments peut dépendre de la disposition des équipements internes 20.

Au moins une partie fixe 25b présente notamment une surface de forme et de dimension appropriée pour couvrir un équipements internes 20 et ainsi d'empêcher tout endommagement de la partie mobile 25a. Ainsi, la au moins une partie fixe 25b peut être de forme allongée vers l'amont de la nacelle 1 de l'invention. La forme et les dimensions de ladite partie fixe 25b peut être choisie en fonction d'autres critères tels que la manoeuvrabilité de la partie mobile 25a.

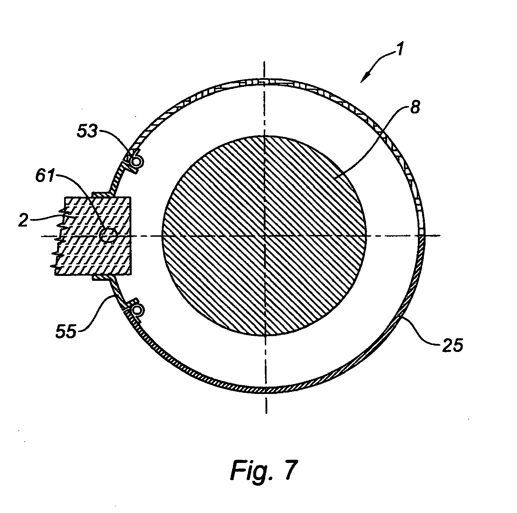

Selon le mode de réalisation représenté aux figures 6 et 7, une partie fixe 25b comprend une rampe 55 montée autour du mât d'accrochage 2 de la nacelle de l'invention et reliée par un moyen d'étanchéité 53 à la partie mobile 25a. Ainsi, on évite tout coincement entre la partie mobile 25a et le mât d'accrochage 2 pendant l'ouverture. Le moyen d'étanchéité est tout type de moyen connu de l'homme du métier, par exemple un joint. La rampe 55 peut présenter tout type de forme adaptée et connue de l'homme du métier, notamment une forme sensiblement triangulaire s'étendant selon selon l'axe longitudinal 61 du mât d'accrochage 2 dont l'angle au sommet est compris entre 2° et 10°, préférentiellement au moins égal à 5° ce qui assure une mobilité de la partie mobile 25a sans coincement de cette dernière au niveau du mât d'accrochage 2. De plus, on évite par ce biais l'écrasement des moyens d'étanchéité 53, notamment des joints d'étanchéité. La présence d'écrasement induit une importante augmentation des efforts lors de la manoeuvre de la nacelle 1 de l'invention.

La rampe 55 peut également présenter une forme adaptée pour couvrir des équipements internes.

Le capot externe médian 13 est maintenu par des éléments de renfort 71 configurés pour fixer ledit capot externe médian 13 à la virole externe du canal du flux secondaire 11 (voir figures 2 à 5). Ainsi, la tenue structurale de la structure médiane 5 est renforcée. Les éléments de renfort 71 peuvent être des éléments sensiblement en forme de S ou de C ce qui permet d'attacher facilement ces éléments 71 à la structure médiane 5 et à la virole externe du canal du flux secondaire 11. Lesdits éléments 71 peuvent être réalisés dans un matériau organique ou métallique.

Afin de permettre à la structure mobile de reculer en amont de la nacelle 1, cette dernière est typiquement dotée de moyens de guidage (non représentés) aptes à permettre un déplacement sensiblement rectiligne du panneau externe 25 vers l'amont de la nacelle 1 de manière à pouvoir ouvrir la structure d'entrée d'air 4 pour les questions de maintenance. A titre d'exemple de système de rails, on peut citer les systèmes de rails décrits dans la demande FR 2 906 568, tels que des coulisseaux sur des rails, un rail en rigole apte à coopérer avec un système de glissière, un système de patins à rouleaux aptes à coopérer avec un rail correspondant ainsi qu'un axe longitudinal apte à coulisser à travers une ouverture correspondante.

## Revendications

1. Nacelle (1) pour turboréacteur (8) comprenant :
- une structure d'entrée d'air (4) apte à canaliser un flux d'air vers une soufflante (7) du turboréacteur (8), comprenant une lèvre d'entrée d'air (21) en amont de la nacelle (1) rattachée à ses extrémités à un panneau externe (25) et un panneau interne (23),
- une structure médiane (5) destinée à entourer ladite soufflante (7) et à laquelle est rattachée la structure d'entrée d'air (4) de manière à assurer une continuité aérodynamique, ladite structure médiane (5) comprenant une virole externe du canal du flux secondaire (11) destinée à entourer le moteur et un capot externe médian (13), et
- une section aval (6) à laquelle est rattachée la structure médiane,
**caractérisée en ce que** le panneau externe (25) comprend une partie mobile (25a) rattachée à la lèvre d'entrée d'air (21) et s'étendant en aval du panneau interne (23), et au moins une partie fixe (25b ; 55) fixée à la structure médiane (5) ou à la section aval (6) et destinée à s'emboîter avec la partie mobile (25a) par complémentarité de forme.

2. Nacelle (1) selon la revendication précédente, **caractérisée en ce que** la partie mobile (25a) s'étend sur au moins une partie de la virole externe du canal du flux secondaire (11).

3. Nacelle (1) selon l'une quelconque des revendications précédentes, **caractérisée en ce que** le capot externe médian (13) est maintenu par des éléments de renfort (71) configurés pour fixer ledit capot externe médian (13) à la virole externe du canal du flux secondaire (11).

4. Nacelle (1) selon la revendication précédente, **caractérisée en ce que** les éléments de renfort (71) sont des éléments sensiblement en forme de S ou de C.

5. Nacelle (1) selon l'une quelconque des revendications précédentes, **caractérisée en ce qu'**une partie fixe (25b) est une rampe (55) montée autour d'un mât d'accrochage (2) de la nacelle (1).

6. Nacelle (1) selon la revendication précédente, **caractérisée en ce que** la rampe (55) présente une forme sensiblement triangulaire s'étendant selon l'axe longitudinal (61) du mât d'accrochage (2) dont l'angle au sommet est au moins égal à 5°.

7. Nacelle (1) selon l'une quelconque des revendications précédentes, **caractérisée en ce qu'**une partie fixe (25b) s'étend vers l'amont de la nacelle (1) selon l'axe longitudinal de cette dernière (1).

8. Nacelle (1) selon l'une quelconque des revendications précédentes, **caractérisée en ce que** la nacelle (1) est une nacelle pour fuselage d'aéronef.

9. Nacelle (1) selon la revendication précédente, **caractérisée en ce que** la nacelle (4) est destinée à être fixée à un mât d'accrochage (2) sensiblement horizontal.

## Patentansprüche

1. Gondel (1) für Turbotriebwerk (8), die umfasst:
- eine Lufteingangsstruktur (4), die imstande ist, einen Luftstrom zu einem Gebläse (7) des Turbotriebwerks (8) zu kanalisieren, die eine Lufteingangslippe (21) stromaufwärts von der Gondel (1) umfasst, die an ihren Enden mit einer äußere Platte (25) und einer inneren Platte (23) verbunden ist,
- eine mittlere Struktur (5), die dazu bestimmt ist, das Gebläse (7) zu umgeben und an die die Lufteingangsstruktur (4) derart angeschlossen ist, dass eine aerodynamische Kontinuität gewährleistet ist, wobei die mittlere Struktur (5) eine externe Einfassung des Kanals des sekundären Stroms (11) umfasst, die dazu bestimmt ist, den Motor zu umgeben, und eine mittlere externe Abdeckung (13), und
- einen unterstromigen Sektor (6), an dem die mittlere Struktur befestigt ist,
**dadurch gekennzeichnet, dass** die äußere Platte (25) einen beweglichen Abschnitt (25a) umfasst, der mit der Lufteingangslippe (21) verbunden ist und sich stromabwärts von der inneren Platte (23) erstreckt, und mindestens einen starren Abschnitt (25b; 55), der an der mittleren Struktur (5) oder am unterstromigen Sektor (6) befestigt ist und dazu bestimmt, mit dem beweglichen Abschnitt (25a) durch Formkomplementarität zu rasten.

2. Gondel (1) nach vorangehendem Anspruch, **dadurch gekennzeichnet, dass** sich der bewegliche Abschnitt (25a) über mindestens einen Abschnitt der externen Einfassung des Kanals des sekundären Stroms (11) erstreckt.

3. Gondel (1) nach einem der vorangehenden Ansprüche, **dadurch gekennzeichnet, dass** die mittlere externe Abdeckung (13) von Verstärkungselementen (71) gehalten wird, die konfiguriert sind, um die mittlere externe Abdeckung (13) an der externen Einfassung des Kanals des sekundären Stroms (11) zu befestigen.

4. Gondel (1) nach vorangehendem Anspruch, **dadurch gekennzeichnet, dass** die Verstärkungselemente (71) Elemente etwa in S- oder C-Form sind.

5. Gondel (1) nach einem der vorangehenden Ansprüche, **dadurch gekennzeichnet, dass** ein fester Abschnitt (25b) eine Rampe (55) ist, die um einen Befestigungsmast (2) der Gondel (1) montiert ist.

6. Gondel (1) nach vorangehendem Anspruch, **dadurch gekennzeichnet, dass** die Rampe (55) eine etwa dreieckige Form aufweist, die sich gemäß der Längsachse (61) des Befestigungsmasts (2) erstreckt und deren Winkel an der Spitze mindestens gleich 5° ist.

7. Gondel (1) nach einem der vorangehenden Ansprüche, **dadurch gekennzeichnet, dass** sich ein fester Abschnitt (25b) in die stromaufwärtige Richtung der Gondel (1) gemäß der Längsachse der Gondel (1) erstreckt.

8. Gondel (1) nach einem der vorangehenden Ansprüche, **dadurch gekennzeichnet, dass** die Gondel (1) eine Gondel für einen Luftfahrzeugrumpf ist.

9. Gondel (1) nach vorangehendem Anspruch, **dadurch gekennzeichnet, dass** die Gondel (4) zur Befestigung an einem etwa horizontalen Befestigungsmast (2) bestimmt ist.

## Claims

1. A nacelle (1) for a turbojet engine (8), comprising:
- an air intake structure (4) capable of channeling an air flow toward a fan (7) of the turbojet engine (8), comprising an air intake lip (21) upstream from the nacelle (1) attached at its ends to an outer panel (25) and an inner panel (23),
- a middle structure (5) designed to surround said fan (7) and to which the air intake structure (4) is attached so as to ensure aerodynamic continuity, said middle structure (5) comprising an outer shroud for the channel of the secondary flow (11) designed to surround the motor and a middle outer cowl (13), and
- a downstream section (6) to which the middle structure is attached,
**characterized in that** the outer panel (25) comprises a moving part (25a) attached to the air intake lip (21) and extending downstream from the inner panel (23), and at least one stationary part (25b; 55) fastened to the middle structure (5) or the downstream section (6) and designed to snap with the moving part (25a) by shape matching.

2. The nacelle (1) according to the preceding claim, **characterized in that** the moving part (25a) extends over at least part of the outer shroud of the channel of the secondary flow (11).

3. The nacelle (1) according to any one of the preceding claims, **characterized in that** the middle outer cowl (13) is maintained by reinforcing elements (71) configured to fasten said middle outer cowl (13) to the outer shroud of the channel of the secondary flow (11).

4. The nacelle (1) according to the preceding claim, **characterized in that** the reinforcing elements (71) are substantially in the shape of an S or C.

5. The nacelle (1) according to any one of the preceding claims, **characterized in that** a stationary part (25b) is a ramp (55) mounted around a fastening mast (2) of the nacelle (1).

6. The nacelle (1) according to the preceding claims, **characterized in that** the ramp (55) has a substantially triangular shape extending along the longitudinal axis (61) of the fastening mast (2) whereof the apical angle is at least equal to 5°.

7. The nacelle (1) according to any one of the preceding claims, **characterized in that** a stationary part (25b) extends toward the upstream direction of the nacelle (1) along the longitudinal axis thereof (1).

8. The nacelle (1) according to any one of the preceding claims, **characterized in that** the nacelle (1) is a nacelle for an aircraft fuselage.

9. The nacelle (1) according to the preceding claim, **characterized in that** the nacelle (4) is designed to be fastened to a substantially horizontal fastening mast (2).
